# FASCICULE DE BREVET EUROPEEN

(11) **EP 1 233 870 B1**
(45) Date de publication et mention de la délivrance du brevet: **13.07.2005**
(21) Numéro de dépôt: 00981209.0
(22) Date de dépôt: 23.10.2000
(51) Int. Cl.: B60C 9/20, B60C 9/22

(54) **PNEUMATIQUE A ENDURANCE AMELIOREE**
LUFTREIFEN MIT VERBESSERTER AUSDAUER
TYRE WITH IMPROVED TENACITY

(30) Priorité: 05.11.1999 FR 9914031
(43) Date de publication de la demande: 28.08.2002
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: COSTA PEREIRA, Pedro, F-63000 Clermont-Ferrand (FR); JARDINE, David, F-63000 Clermont-Ferrand (FR)
(74) Mandataire: Dequire, Philippe Jean-Marie Denis
(86) Numéro de dépôt international: PCT/EP2000/010414
(87) Numéro de publication internationale: WO 2001/032446

(56) Documents cités:
- EP-A- 0 329 593
- EP-A- 0 488 734
- EP-A- 0 845 348
- WO-A-99/25571
- US-A- 5 373 886
- PATENT ABSTRACTS OF JAPAN vol. 018, no. 420 (P-1782), 5 août 1994 (1994-08-05) & JP 06 129804 A (SUMITOMO DENSETSU KK), 13 mai 1994 (1994-05-13)

## Description

L'invention concerne un pneumatique pour véhicule et notamment un pneumatique dont l'architecture est optimisée pour renforcer son endurance et sa résistance à la vitesse.

Il est désormais usuel notamment pour des pneumatiques pour des véhicules de tounsme destinés à rouler à des vitesses élevées d'utiliser pour renforcer le sommet une nappe additionnelle de fils orientés circonférentiellement. Cette nappe peut être disposée au-dessus des nappes sommet de renforcement à angles elles aussi usuellement utilisées.

Dans une telle configuration, cette nappe de fils orientés circonférentiellement est la nappe radialement la plus extérieure du sommet du pneumatique.

Une rupture en roulage de l'un ou de plusieurs de ces fils circonférentiels peut être dommageable pour la durée de vie du pneumatique. En effet, de telles ruptures diminuent le frettage du sommet mais aussi permettent des infiltrations d'eau le long des fils circonférentiels ce qui peut entraîner des phénomènes de corrosion des fils métalliques.

Une zone sensible aux endommagements de la nappe de fils circonférentiels est l'extrémité latérale de la nappe de travail la plus proche des fils circonférentiels en raison de la distance faible entre ces fils circonférentiels et les extrémités des fils métalliques de la nappe de travail. L'endommagement des fils circonférentiels peut notamment provenir de contacts abrasifs avec l'extrémité des fils de la nappe à angle la plus extérieure.

Les concepteurs de pneumatiques ont inventé diverses dispositions pour maintenir éloignés les fils circonférentiels des extrémités des nappes de renforcement à angles du sommet, notamment l'ajout de couches de gommes de bordage.

Un pneumatique selon le préambule des revendications 1 et 2 est connu du document JP 06 124 98 04.

Ces opérations rendent le pneumatique plus complexe à fabriquer et augmentent son coût. Par ailleurs les opérations de conformation rendent la maîtrise industrielle de ces opérations complémentaires sujette à des dérives dans le temps.

C'est l'objet de cette invention de présenter une disposition économique pour résoudre cette question technique.

Dans ce qui suit, on entend par « fil », aussi bien des monofilaments que des multifilaments, ou des assemblages comme des câbles, des retors ou bien encore n'importe quel type d'assemblage équivalent, et ceci, quels que soient la matière et le traitement de ces fils, par exemple traitement de surface ou enrobage ou pré encollage pour favoriser l'adhérence sur le caoutchouc.

On entend par « couche de gomme de liaison » pour une nappe de renforcement donnée le mélange caoutchouteux en contact avec les fils de renforcement de la nappe, adhérant à ceux-ci et remplissant les interstices entre fils adjacents.

On entend par « contact » entre un fil et une couche de gomme de liaison, le fait que, au moins, une partie de la circonférence extérieure du fil est en contact intime avec le mélange caoutchouteux constituant de la gomme de liaison.

On entend par « titre », la masse en grammes de mille mètres d'un fil. Le titre est exprimé en tex. La contrainte subie par un fil ou le module de ce fil sont exprimés en « cN/tex », cN voulant dire centi-newton.

On entend par « pas de pose p » d'un fil orienté sensiblement circonférentiellement et enroulé en spirale, la distance séparant transversalement les axes de deux spires de fil adjacentes. Le pas de pose est l'inverse de la « densité de pose d » qui correspond au nombre de spires de fil contenues dans une largeur axiale donnée : p = 1/d. Usuellement d s'exprime en nombre de fils par décimètre (f/dm) et p en millimètres, ainsi p = 100/d.

On entend par « potentiel de contraction à chaud » d'un fil textile appelé « CS », la variation relative de longueur d'un fil textile positionné, sous une prétension égale à la demi somme des titres de chacun des brins élémentaires, entre les plateaux d'un four (appareil du type TESTRITE) régulé à une température constante de 185 ± 0.5°C. La CS est exprimée en % par la formule suivante : CS (%) = 100 × | L₁ - L₀ | / L₀ où L₀ est la longueur initiale du fil adhérisé, à la température ambiante sous une prétension égale à la demi somme des titres de chacun des brins élémentaires et L₁ la longueur de ce même fil à 185°C. La longueur L₁ est mesurée au bout d'une durée de stabilisation du fil à la température de 185°C, égale à 120 s ± 2 %. L'écart type sur la mesure de CS est de ± 0.15 %.

Ce potentiel est directement la conséquence de l'ensemble des opérations que le fil a subi lors de son élaboration ou lors de sa mise en oeuvre.

L'invention a pour objet un pneumatique comportant un sommet prolongé par deux flancs et deux bourrelets, une carcasse ancrée dans les deux bourrelets, dans lequel le sommet comprend radialement de l'intérieur vers l'extérieur :
- au moins une nappe de renforcement de largeur axiale L, formée de fils parallèles et orientés selon un angle α relativement à la direction circonférentielle compris entre 10 et 75 degrés, et
- au moins une nappe de fils obtenue par enroulement en spirale des fils dans une direction sensiblement circonférentielle, disposée radialement extérieurement relativement à la nappe de renforcement et s'étendant axialement au-delà de la nappe de renforcement.

Ce pneumatique est caractérisé en ce que, dans les zones disposées axialement relativement au plan équatorial P du pneumatique à une distance comprise entre (L/2 - h) et (L/2 + H), le pas de pose des fils est supérieur ou égal à la distance axiale H + h, en ce que les valeurs de H et h sont supérieures ou égales à 2 mm et en ce que ladite nappe de fils a une largeur axiale strictement supérieure à L + 2 H.

Le fait que dans cette zone, le pas de pose des fils orientés circonférentiellement et enroulés en spirale est supérieur ou égal à la distance axiale H + h, veut dire que, d'un côté à l'autre de cette zone, on n'a disposé, au plus, qu'une seule spire de fil circonférentiel. Ce mode de réalisation diminue donc de façon sensible la probabilité d'une rupture accidentelle de ce fil due à un contact abrasif entre ce fil et un fil de la nappe adjacente et ainsi renforce la résistance du pneumatique dans son ensemble.

L'invention a aussi pour objet un pneumatique similaire dans lequel, la nappe de fils circonférentiels comprend, au moins d'un côté du plan équatorial P du pneumatique, un premier enroulement en spirale s'étendant du plan équatorial P jusqu'à une distance axiale de (L/2 - h), et au moins un second enroulement en spirale s'étendant axialement extérieurement au-delà d'une distance axiale (L/2 + H) du plan équatorial du pneumatique, et dans lequel les valeurs de H et h sont supérieures ou égales à 2mm.

Ce mode de réalisation a l'avantage de n'avoir aucun risque de contact entre les fils de la nappe circonférentielle et l'extrémité axiale des fils de la nappe de renforcement formée de fils orientés selon l'angle α. La confection industrielle est cependant un peu plus longue en raison de l'arrêt et de la reprise de la pose des fils circonférentiels.

Avantageusement, le pas de pose de la nappe de fils orientés sensiblement circonférentiellement enroulés en spirale est inférieur dans la zone disposée axialement extérieurement au-delà de la distance axiale (L/2 + H) au pas de pose des fils dans la zone centrale du sommet du pneumatique.

Cela permet de compenser l'absence de frettage en regard de l'extrémité axiale de la nappe de renforcement de sommet de largeur L pour obtenir un frettage uniforme. On peut aussi augmenter le frettage dans la zone épaule pour améliorer la résistance aux grandes vitesses du pneumatique.

Dans un but similaire, on peut aussi diminuer le pas de pose des fils circonférentiels dans la zone disposée axialement intérieurement à proximité de la distance axiale (L/2 - h).

Lorsque le sommet du pneumatique comprend une seconde nappe de renforcement de largeur axiale L', radialement intérieure relativement à la première, formée de fils parallèles et orientés selon un angle β compris entre 10 et 75 degrés, la nappe de fils circonferentiels peut s'étendre axialement en deçà ou au-delà de la distance L'/2 du plan équatorial P du pneumatique selon le niveau de performance en résistance aux grandes vitesses recherché.

Selon un mode de réalisation particulier, la bande de roulement du pneumatique est, sur au moins une zone axiale donnée du sommet, en contact direct avec les fils orientés circonferentiellement. Cela facilite la confection du pneumatique en diminuant le nombre de produits a poser. Lorsque la bande de roulement comporte un premier mélange destiné a venir en contact avec le sol ainsi qu'une sous-couche disposée radialement sous le premier mélange, c'est la sous-couche qui est avantageusement en contact direct avec les fils orientés circonférentiellement.

Les mélanges dits de sous-couche sont destinés à améliorer diverses performances comme la consommation ou la rigidité de dérive des pneumatiques.

Avantageusement, la nappe de fils orientés sensiblement circonférentiellement est constituée d'au moins deux fils enroulés simultanément en spirale. Cela permet de diminuer le temps de pose de la nappe. Le nombre maximal de fils que l'on peut enrouler simultanément est au plus de quatre.

L'enroulement simultané de deux à quatre fils permet de diminuer sensiblement le temps de pose de la nappe de fils circonférentiels puisque le pas de pose est doublé tout en conservant la même densité des fils. Cela n'augmente pas sensiblement la possibilité de contacts abrasifs entre les fils orientés circonférentiellement et l'extrémité des fils orientés selon α dans la zone critique. Au-delà de quatre fils posés simultanément, la longueur de contact possible augmente de façon telle que le bénéfice de l'invention disparaît.

De préférence, h est compris entre 2 et 10 mm, et H est supérieur à 2 mm.

Les fils orientés sensiblement circonférentiellement et enroulés en spirale développent, avantageusement, une contrainte sous 3 % de déformation supérieure à 12 cN/tex et préférentiellement supérieure à 20 cN/tex. Ces fils présentent donc un haut module d'élasticité aux déformations élevées, ce qui permet à la nappe qu'ils constituent d'assumer toutes ses fonctions, notamment le frettage du sommet à haute vitesse tout en gardant une densité de pose relativement faible.

Ces fils peuvent aussi présenter un module initial inférieur à 900 cN/tex et de préférence, inférieur à 800 cN/tex. Le bas module initial de ces fils a l'avantage d'améliorer le confort du pneumatique et de diminuer son bruit de roulement bord de piste à basse vitesse.

Un tel fil peut être un câble hybride associant au moins un retors de Nylon et au moins un retors d'aramide.

Avantageusement, les fils orientés circonférentiellement présentent un potentiel de contraction standard à chaud inférieur à 3,5 %. Cela permet de limiter leur contraction lors de la vulcanisation du pneumatique et ainsi de renforcer dans toutes les variantes de réalisation décrites la probabilité d'éviter, en fonctionnement, tout contact abrasif entre les fils orientés circonférentiellement et ceux orientés selon α disposés radialement intérieurement.

Il est aussi avantageux d'enrouler en spirale les fils avec des diamètres de pose correspondant sensiblement aux diamètres finaux des fils dans le pneumatique après vulcanisation. Comme précédemment, cela renforce la probabilité d'éviter, en fonctionnement, tout contact abrasif entre les fils orientés circonférentiellement et ceux orientés selon α disposés radialement intérieurement.

Les modes de réalisation décrits ont aussi l'avantage de permettre de diminuer la quantité et l'épaisseur des couches de gommes de bordage. Ceci est favorable en termes d'épaisseur et d'échauffement à l'épaule.

Plusieurs modes de réalisation de l'invention sont maintenant décrits à l'aide du dessin annexé dans lequel :
- la figure 1 présente une demi coupe axiale d'un pneumatique selon l'invention ;
- la figure 2 présente une demi coupe axiale d'un second mode de réalisation du pneumatique de la figure 1 ;
- la figure 3 présente une variante d'un pneumatique selon l'invention ;
- la figure 4 présente une seconde variante d'un pneumatique selon l'invention ;
- les figures 5, 6 et 7 présentent trois autres variantes de réalisation d'un pneumatique selon l'invention ; et
- la figure 8 présente les courbes force allongement de trois types de fils décrits ci-après.

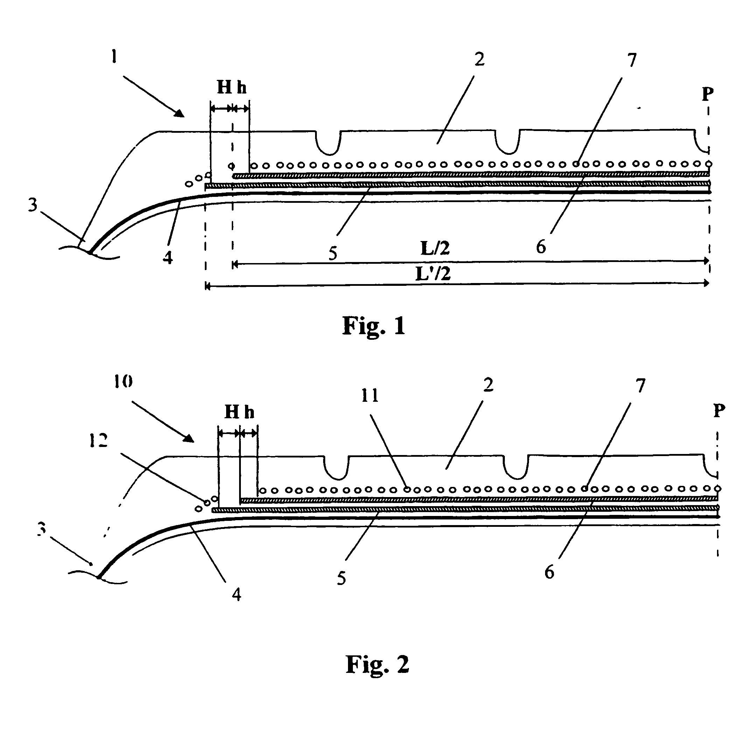

La figure 1 présente une demi coupe axiale schématique d'un pneumatique 1 selon l'invention. Ce pneumatique comprend un sommet 2 prolongé par deux flancs 3 et deux bourrelets non représentés. Le sommet comporte une nappe carcasse 4 ancrée de façon connue dans les deux bourrelets, deux nappes de renforcement 5 et 6 formées de fils parallèles dans chaque nappe et croisés d'une nappe à la suivante en faisant avec la direction circonférentielle des angles (α, β) d'environ 30 degrés et une nappe de fils orientés sensiblement circonférentiellement 7. La nappe carcasse 4 est orientée sensiblement à 90 degrés relativement à la direction circonférentielle, c'est une nappe carcasse radiale.

La nappe de fils orientés circonférentiellement 7 est composée de fils textiles enroulés en spirale pour assurer un bon frettage du sommet 2. Dans l'exemple de la figure 1, ces fils textiles sont un retors adhérisé de titre égal à 521 tex élaboré à partir de deux brins aramide identiques de 167 tex surtordus individuellement à 280 t/m et d'un brin Nylon de 140 tex surtordu à 280 t/m, ces trois brins étant ensuite retordus simultanément à 280 t/m dans la direction opposée. Le module initial de ce fil est égal à 740 cN/tex et la contrainte développée sous 3 % de déformation est égale à 30 cN/tex.

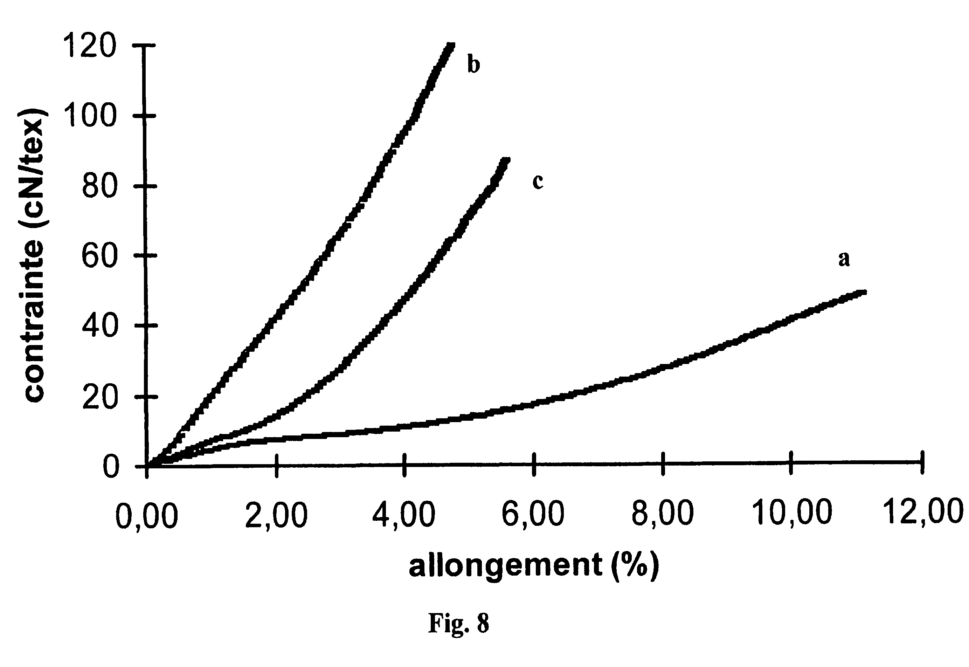

La figure 8 présente une courbe force-allongement de ce fil ainsi que celles de deux autres fils usuels :
- courbe a : fil de Nylon (2 brins de Nylon de 441 tex) ;
- courbe b : fil aramide (2 brins aramide de titre 167 tex) ;
- courbe c : fil aramide-Nylon.

Le fil Nylon (courbe a) est un retors adhérisé de titre 441 tex élaboré à partir de 2 brins Nylon identiques de 210 tex surtordus individuellement à 200 t/m (tours/mètre) puis retordus simultanément à 200 t/m dans la direction opposée. Le module initial de ce fil est égal à 530 cN/tex, la contrainte développée sous 3 % est de 9 cN/tex. Ce fil a donc un bas module d'élasticité aux faibles et aux fortes déformations.

Le fil aramide (courbe b) est un retors adhérisé de titre égal à 376 tex élaboré à partir de 2 brins aramide identiques de 167 tex surtordus individuellement à 440 t/m puis retordus simultanément à 440 t/m dans la direction opposée. Le module initial de ce fil est égal à 2030 cN/tex, la contrainte développée sous 3 % est de 68 cN/tex. Ce fil a un haut module d'élasticité.

Les fils illustrés aux courbes b et c présentent l'avantage d'avoir un haut module d'élasticité aux fortes déformations ce qui leur donne une grande efficacité pour fretter les sommets des pneumatiques tout en limitant la densité de fils nécessaire. Le fil aramide-Nylon a aussi un bas module initial ce qui a l'avantage d'améliorer le confort du pneumatique et de diminuer son bruit de roulement bord de piste à basse vitesse.

La nappe de renforcement de sommet 5 a une largeur axiale L' et la nappe 6 une largeur axiale L. A l'extrémité axiale représentée de la nappe 6, dans une zone dont la distance axiale, relativement au plan équatorial P du pneumatique, est comprise entre (L/2 - h) et (U2 + H) le pas de pose des fils de la nappe 7 est très fortement augmenté. Dans cette zone, il n'y a qu'une spire de fil circonférentiel. Le pas de pose p est donc supérieur ou égal à H + h. Cela permet de limiter les risques de contact abrasif entre les fils de la nappe 7 et ceux de l'extrémité axiale de la nappe 6. Pour être efficaces, les valeurs de H et h sont supérieures ou égales à 2 mm. h est compris entre 2 et 10 mm.

Dans le cas d'un hybride 167*167*140 à 100 f/dm (le pas de pose est donc de 1 mm), cette disposition revient à enlever 4 à 5 fils de frettage dans cette zone circonférentielle sensible. Compte tenu du module élevé de cet hybride, la surtension en centrifugation est très faible.

La figure 2 présente une demi coupe axiale partielle d'un second pneumatique selon l'invention, similaire au pneumatique 1. Dans le pneumatique 10, la nappe de fils circonférentiels 7 comprend un premier enroulement en spirale 11 s'étendant du plan équatorial du pneumatique P jusqu'à la distance axiale (L/2 - h) et un second enroulement en spirale 12 s'étendant axialement extérieurement au-delà de la distance axiale (L/2 + H) du plan P. La pose de la nappe 7 se fait ainsi en trois phases successives, un premier enroulement d'un premier côté du sommet, puis enroulement de la partie centrale du sommet et enfin un troisième enroulement de l'autre côté du sommet. Cette solution demande plus de temps de réalisation que la précédente mais le risque de tout contact abrasif entre deux fils circonférentiels et orienté selon α est réduit.

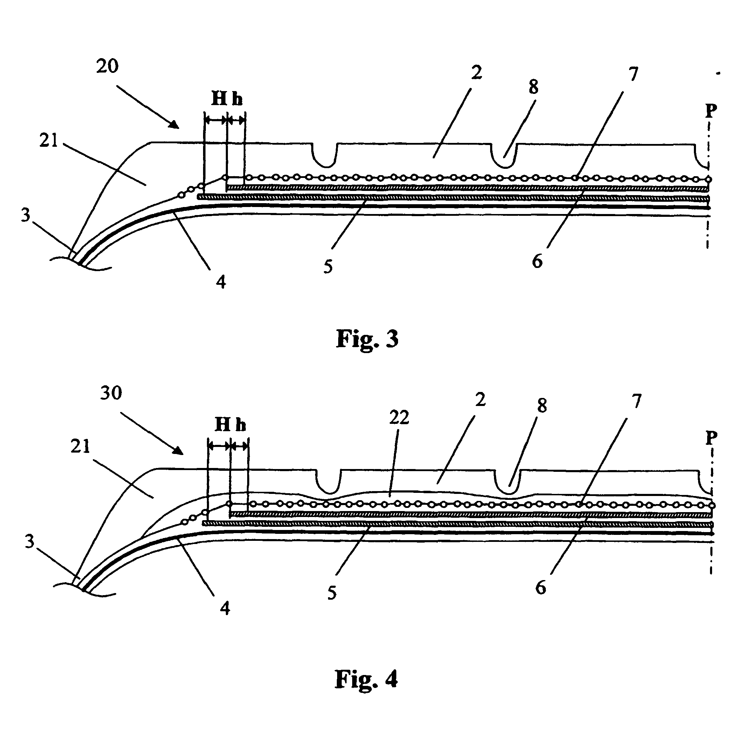

La figure 3 présente une demi coupe axiale d'un pneumatique 20 dans lequel la bande de roulement 21 est en contact direct avec les fils de renfort de la nappe 7. Cela veut dire que la bande de roulement 21 constitue une « couche de gomme de liaison » pour la nappe 7. En effet, lors de la confection du pneumatique, après avoir disposé les nappes de renforcement 5 et 6 ainsi que leurs couches de liaison, on applique par enroulement en spirale le fil de la nappe 7. Ce fil est appliqué seul, c'est-à-dire sans être auparavant assemblé par bande de 2 fils ou plus par une gomme de liaison. On dispose alors le mélange caoutchouteux de la bande de roulement directement sur les fils individuels de la nappe 7, c'est donc ce mélange caoutchouteux de la bande de roulement qui va être en contact avec la circonférence des fils de la nappe 7 et adhérer avec eux. Cela facilite la fabrication du pneumatique en diminuant le nombre de produits différents à poser ainsi que le temps nécessaire à cette fabrication.

A la figure 4, le pneumatique 30 comprend, entre la bande de roulement 21 et la nappe de fils orientés circonférentiellement 7, une sous couche 22. Cette sous couche 22 est appliquée directement sur les fils de la nappe 7. Les mélanges dits de sous-couche sont destinés à améliorer diverses performances comme la consommation ou la rigidité de dérive des pneumatiques.

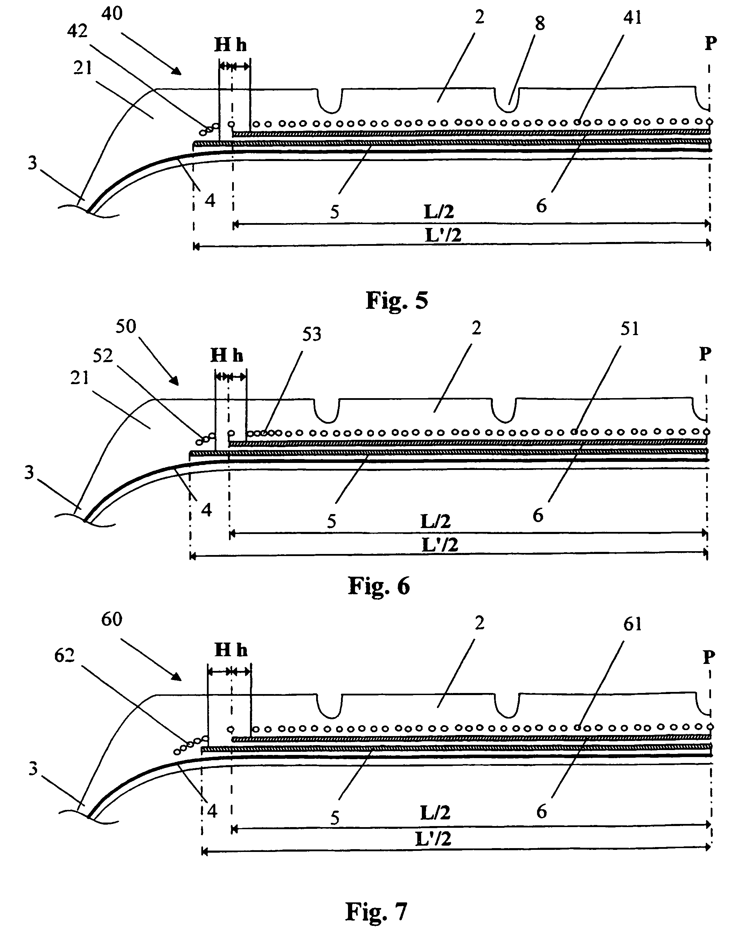

Les figures 5, 6 et 7 présentent des modes de réalisation préférentiels du sommet de pneumatique de la figure 1.

A la figure 5, on voit une demi coupe axiale d'un pneumatique 40 dans lequel la nappe de fils circonférentiels 41 est constituée par un enroulement en spirale avec, comme précédemment, une augmentation du pas de pose en regard de l'extrémité de la seconde nappe de renforcement croisée 6. La nappe 41 s'étend axialement en deçà de l'extrémité axiale de la seconde nappe de renforcement croisée 5. Dans la zone 42 de la nappe 41, disposée axialement entre les extrémités de la nappe 6 et de la nappe 5, le pas de pose de la nappe 41 est diminué pour compenser, voire augmenter la densité moyenne de fils de renforts circonférentiels dans cette zone du pneumatique.

Cette compensation de la diminution du nombre de fils de renfort circonférentiels due à l'augmentation du pas de pose au-dessus de l'extrémité de la nappe 6 est aussi possible de part et d'autre de cette extrémité. C'est ce qui est présenté à la figure 6. La nappe de fils circonférentiel 51 du pneumatique 50 illustré à la figure 6 comprend deux zones où le pas de pose du fil est diminué relativement à la zone centrale du sommet : la zone 52 axialement comprise entre les extrémités axiales des deux nappes 5 et 6 et la zone 53 axialement intérieure relativement à L-h. Le fil de la nappe 51 est aussi appliqué avec un pas de pose fortement augmenté dans la zone comprise entre L-h et L+H encadrant axialement l'extrémité de la nappe 6.

Enfin la figure 7 présente un mode de réalisation similaire à celui de la figure 5. Le pneumatique 60 illustré à cette figure est tel que la nappe de fils circonférentiels 61 se prolonge axialement au-delà de l'extrémité axiale de la nappe de renforcement croisée 5. Le zone 62 correspondante a de préférence un pas de pose aussi diminué relativement au pas de pose du fil dans la zone centrale de la nappe 61. Ce mode de réalisation améliore la résistance du sommet du pneumatique à grande vitesse.

Des pneumatiques 195/65 - 15 ont été réalisés avec les configurations suivantes :
- le témoin A comprenait un sommet avec deux nappes croisées métalliques (en câbles 6.23 NF à 80f/dm orientés à 23°) avec une nappe de fils circonférentiels constituée de fils correspondant à la figure 8c (fils hybride aramide-Nylon) ; cette nappe avait été enroulée avec un pas uniforme de trois mm et s'étendait au-delà de l'extrémité de la nappe de renfort croisée adjacente mais en deçà de l'extrémité axiale de l'autre nappe de renfort :

- le pneumatique B est similaire au mode de réalisation de la figure 5, la nappe 41 presentait un grand pas de pose au-dessus de l'extrémité de la nappe 6 ainsi qu'un pas de pose plus faible dans la zone 42, au-delà de l'extrémité de la nappe 6 ;
- le pneumatique C, correspond à la figure 6, avec un pas de pose du fil circonférentiel de 1 mm de part et d'autre de l'extrémité de la nappe 6 ; et
- le pneumatique D similaire au pneumatique B, mais avec en plus la nappe 41 s'étendant axialement au-delà de l'extrémité de la nappe 5 sur 5 mm.

Ces pneumatiques ont subi un test de résistance au roulage à grande vitesse. Ce test correspond a faire subir au pneumatique, à charge nominale, une augmentation continue de vitesse de roulage de 60 km/h. La vitesse de départ du test est de 210 km/h. Le résultat est donne par la vitesse à laquelle le pneumatique a été défaillant. Le test est effectué sur un volant de developpement égal à 5.36 m.

Le tableau I donne les résultats de ce test :

| **Pneumatique** | **Vitesse maximale (km/h)** |
|---|---|
| A | 243 |
| B | 247 |
| C | 253 |
| D | 270 |

La solution B améliore de façon sensible la vitesse limite atteinte, cela indique l'intérêt de réduire les risques de contact abrasifs entre les fils circonférentiels et les extrémités des fils de la nappe métallique adjacente. Ce résultat est obtenu alors que la densité réelle de fils circonférentiels est inférieure dans le pneumatique B relativement au témoin A.

Le fait de rétablir la même densité de fils, solution C, confirme l'importance de la solution de l'invention.

Enfin, le résultat du pneumatique D illustre le rôle très important, pour cette performance, d'avoir un excellent frettage de la zone épaule du pneumatique.

Selon un premier mode de réalisation, la confection du pneumatique selon l'invention peut avantageusement être réalisée sur un noyau rigide imposant la forme de sa cavité intérieure, tels ceux décrits par EP 242 840 ou EP 822 047. On applique sur ce noyau, dans l'ordre requis par l'architecture finale, tous les constituants du pneumatique, qui sont disposés directement à leur place finale, sans subir de conformation à aucun moment de la confection. La cuisson s'effectue sur noyau, celui-ci n'étant retiré qu'après la phase de vulcanisation. Cette confection peut notamment utiliser les dispositifs décrits dans le brevet EP 0 243 851 pour la pose des fils du fil de carcasse, EP 0 248 301 pour la pose des fils de sommet et EP 0 264 600 pour la pose des gommes caoutchouteuses.

Ce mode de fabrication a l'avantage de réduire fortement voire d'éliminer les précontraintes imposées aux fils, particulièrement à ceux orientés à 0°, lors des phases traditionnelles de conformation

Selon un second mode de réalisation, on peut refroidir partiellement le bandage sur le noyau pour maintenir les fils dans l'état de déformation imposé lors de la pose.

On peut aussi, de manière équivalente, fabriquer le pneumatique sur un tambour tel que décrit dans WO 97/47 463 ou EP 718 090, à condition de faire la conformation de l'ébauche du pneumatique avant d'effectuer la pose des fils orientés circonférentiellement.

On peut encore réaliser la pose des fils orientés circonférentiellement sur une forme à la geométrie identique à la forme visée dans le moule de cuisson. Le bloc sommet est ensuite assemblé avec l'ébauche complémentaire du pneumatique suivant des techniques de transfert connues de l'homme de l'art, puis, toujours suivant des principes connus, le pneumatique est emboîté et mis sous pression par déploiement d'une membrane à l'intérieur du pneumatique.

Ce mode de réalisation garantit aussi l'absence de précontraintes dues à la conformation en presse de vulcanisation.

Tous ces modes de réalisation permettent d'obtenir que les fils orientés circonférentiellement soient enroulés en spirale avec des diamètres de pose s'écartant, sur toute la largeur du sommet, de moins de 0,5 % des diamètres finaux de ces fils dans le pneumatique après vulcanisation.

## Revendications

1. Pneumatique (1, 20, 30, 40, 50, 60) comportant un sommet (2) prolongé par deux flancs (3) et deux bourrelets, une carcasse (4) ancrée dans les deux bourrelets, ledit sommet (2) comprenant radialement de l'intérieur vers l'extérieur :
- au moins une nappe de renforcement (6) de largeur axiale L, formée de fils parallèles et orientés selon un angle α relativement à la direction circonférentielle compris entre 10 et 75 degrés, et
- au moins une nappe de fils (7, 41, 51, 61) obtenue par enroulement en spirale desdits fils dans une direction sensiblement circonférentielle, disposée radialement extérieurement relativement à ladite nappe de renforcement (6) et s'étendant axialement au-delà de ladite nappe de renforcement (6),
**caractérisé en ce que**, dans les zones disposées axialement relativement au plan équatorial P du pneumatique à une distance comprise entre (L/2 - h) et (L/2 + H), le pas de pose (p) desdits fils est supérieur ou égal à la distance axiale H + h, **en ce que** les valeurs de H et h sont supérieures ou égales à 2 mm et **en ce que** ladite nappe de fils (7, 41, 51, 61) a une largeur axiale strictement supérieure à L + 2 H.

2. Pneumatique (10) comportant un sommet (2) prolongé par deux flancs (3) et deux bourrelets, une carcasse (4) ancrée dans les deux bourrelets, ledit sommet (2) comprenant radialement de l'intérieur vers l'extérieur :
- au moins une nappe de renforcement (6) de largeur axiale L, formée de fils parallèles et orientés selon un angle α relativement à la direction circonférentielle compris entre 10 et 75 degrés, et
- au moins une nappe de fils (7) obtenue par enroulement en spirale desdits fils dans une direction sensiblement circonférentielle, disposée radialement extérieurement relativement à ladite nappe de renforcement (6) et s'étendant axialement au-delà de ladite nappe de renforcement (6),
**caractérisé en ce que** ladite nappe de fils circonférentiels (7) comprend, au moins d'un côté du plan équatorial P du pneumatique, un premier enroulement en spirale (11) s'étendant du plan équatorial du pneumatique jusqu'à une distance axiale de (L/2 - h), et au moins un second enroulement en spirale (12) s'étendant axialement extérieurement au-delà d'une distance axiale (L/2 + H) du plan équatorial P du pneumatique et **en ce que** les valeurs de H et h sont supérieures ou égales à 2 mm.

3. Pneumatique (40, 50, 60) selon l'une des revendications 1 et 2, dans lequel le pas de pose (p) de la nappe de fils orientés sensiblement circonférentiellement enroulés en spirale (41, 51, 61) est inférieur dans la zone disposée axialement extérieurement au-delà de la distance axiale (L/2 + H) au pas de pose desdits fils dans la zone centrale du sommet du pneumatique.

4. Pneumatique (50) selon l'une des revendications 1 à 3, dans lequel le pas de pose (p) de la nappe de fils orientés sensiblement circonférentiellement enroulés en spirale (51) est inférieur dans la zone disposée axialement intérieurement à proximité de la distance axiale (L/2 - h) au pas de pose desdits fils dans la zone centrale du sommet du pneumatique.

5. Pneumatique (40, 50) selon l'une des revendications 1 à 4, dans lequel, le sommet (2) du pneumatique comprenant une seconde nappe de renforcement (5) de largeur axiale L', formée de fils parallèles et orientés selon un angle β relativement à la direction circonférentielle compris entre 10 et 75 degrés et disposée radialement intérieurement relativement à la première nappe de renforcement (6) de largeur axiale L, ladite nappe de fil circonférentiels (41, 51) s'étend axialement en deçà de la distance axiale L'/2.

6. Pneumatique (1, 10, 20, 30, 60) selon l'une des revendications 1 à 4, dans lequel, le sommet (2) du pneumatique comprenant une seconde nappe de renforcement (5) de largeur axiale L' formée de fils parallèles et orientés selon un angle β relativement à la direction circonférentielle et disposée radialement intérieurement relativement à la première nappe de renforcement (6) de largeur axiale L, ladite nappe de fils circonférentiels (7, 61) s'étend axialement au-delà de la distance axiale L'/2.

7. Pneumatique (1. 10, 20, 30, 40, 50, 60) selon l'une des revendications 1 à 6, dans lequel la distance axiale h est comprise entre 2 et 10 mm.

8. Pneumatique (1, 10, 20, 30, 40, 50, 60) selon l'une des revendications 1 à 7, dans lequel la distance axiale H est supérieure à 2 mm.

9. Pneumatique (20) selon l'une des revendications 1 à 8, dans lequel ladite bande de roulement (21) est en contact direct avec lesdits fils enroulés en spirale (7) dans une direction sensiblement circonférentielle.

10. Pneumatique (30) selon la revendication 9, dans lequel, la bande de roulement (21) comportant un premier mélange (21) destiné à venir en contact avec le sol ainsi qu'une sous-couche (22) disposée radialement sous ledit premier mélange (21), ladite sous-couche (22) est en contact direct avec lesdits fils enroulés en spirale (7) dans une direction sensiblement circonférentielle.

11. Pneumatique (1, 10, 20, 30, 40, 50, 60) selon l'une des revendications 1 à 10, dans lequel les fils orientés circonférentiellement comprennent au moins deux fils enroulés simultanément en spirale.

12. Pneumatique (1, 10, 20, 30, 40, 50, 60) selon la revendication 11, dans lequel les fils orientés circonférentiellement comprennent au plus quatre fils enroulés simultanément en spirale.

13. Pneumatique (1, 10, 20, 30, 40, 50, 60) selon l'une des revendications 1 à 12, dans lequel les fils orientés circonférentiellement développent une contrainte sous 3 % de déformation supérieure à 12 cN/tex.

14. Pneumatique (1, 10, 20, 30, 40, 50, 60) selon la revendication 13, dans lequel les fils orientés circonférentiellement développent une contrainte sous 3 % de déformation supérieure à 20 cN/tex.

15. Pneumatique (1, 10, 20, 30, 40, 50, 60) selon l'une des revendications 13 ou 14, dans lequel lesdits fils orientés circonférentiellement possèdent un module initial inférieur à 900 cN/tex.

16. Pneumatique (1, 10, 20, 30, 40, 50, 60) selon la revendication 15, dans lequel lesdits fils orientés circonférentiellement possèdent un module initial inférieur à 800 cN/tex.

17. Pneumatique (1, 10, 20, 30, 40, 50, 60) selon l'une des revendications 1 à 16, dans lequel ledit fil de haut module est un câble hybride associant au moins un retors de Nylon et au moins un retors d'aramide.

18. Pneumatique (1, 10, 20, 30, 40, 50, 60) selon l'une des revendications 1 à 17, dans lequel les fils orientés sensiblement circonférentiellement enroulés en spirale présentent un potentiel de contraction standard à chaud inférieur à 3,5 %.

19. Pneumatique (1, 10, 20, 30, 40, 50, 60) selon l'une des revendications 1 à 18, dans lequel les fils orientés sensiblement circonférentiellement sont enroulés en spirale avec des diamètres de pose correspondant sensiblement, sur toute la largeur du sommet, aux diamètres finaux desdits fils dans le pneumatique après vulcanisation.

## Patentansprüche

1. Luftreifen (1, 20, 30, 40, 50, 60), der einen Scheitel (2), der sich in zwei Flanken (3) und zwei Wülsten fortsetzt, und eine Karkasse (4) aufweist, die in den beiden Wülsten verankert ist, wobei der Scheitel (2) in radialer Richtung von innen nach außen aufweist:
- mindestens eine Verstärkungslage (6) einer axialen Breite L, die aus parallelen und relativ zur Umfangsrichtung in einem Winkel α von 10 bis 75 Grad orientierten Drähten gebildet wird, und
- mindestens eine Lage aus Drähten (7, 41, 51, 61), die durch spiralförmiges Wickeln der Drähte in einer in etwa umlaufenden Richtung erhalten wird, die in Bezug auf die Verstärkungslage (6) radial außen angeordnet ist und die sich in axialer Richtung über die Verstärkungslage (6) hinaus erstreckt,
**dadurch gekennzeichnet, dass** in den Bereichen, die sich in axialer Richtung relativ zur Äquatorialebene P des Luftreifens in einem Abstand von (L/ 2 - h) bis (L/2 + H) befinden, der Verlegungsabstand (p) der Drähte dem axialen Abstand H + h entspricht oder darüber liegt, **dadurch**, dass die Werte von H und h 2 mm betragen oder darüber liegen, und **dadurch**, dass die Lage der Drähte (7, 41, 51, 61) eine axiale Breite größer L + 2H aufweist.

2. Luftreifen (10), der einen Scheitel (2), der sich in zwei Flanken (3) und zwei Wülsten fortsetzt, und eine Karkasse (4) aufweist, die in den beiden Wülsten verankert ist, wobei der Scheitel (2) in radialer Richtung von innen nach außen aufweist:
- mindestens eine Verstärkungslage (6) einer axialen Breite L, die aus parallelen und relativ zur Umfangsrichtung in einem Winkel α von 10 bis 75 Grad orientierten Drähten gebildet wird, und
- mindestens eine Lage aus Drähten (7), die durch spiralförmiges Wickeln der Drähte in einer in etwa umlaufenden Richtung erhalten wird, die in Bezug auf die Verstärkungslage (6) radial außen angeordnet ist und die sich in axialer Richtung über die Verstärkungslage (6) hinaus erstreckt,
**dadurch gekennzeichnet, dass** die Lage der umlaufenden Drähte (7) zumindest auf einer Seite der Äquatorialebene P des Luftreifens eine erste spiralförmige Wicklung (11), die sich von der Äquatorialebene des Luftreifens bis zu einem axialen Abstand von (L/ 2 - h) erstreckt, und mindestens eine zweite spiralförmige Wicklung (12) umfasst, die sich axial außen über einen axialen Abstand (L/2 + H) der Äquatorialebene P des Luftreifens hinaus erstreckt und **dadurch**, dass die Werte von H und h mindestens 2 mm betragen.

3. Luftreifen (40, 50, 60) nach einem der Ansprüche 1 und 2, **dadurch gekennzeichnet, dass** der Verlegungsabstand (p) der Lage der im Wesentlichen in Umfangsrichtung ausgerichteten, spiralförmig gewickelten Drähte (41, 51, 61) in dem Bereich, der axial außen jenseits des axialen Abstands (L/2 + H) angeordnet ist, kleiner ist als der Verlegungsabstand der Drähte in dem zentralen Bereich des Scheitels des Luftreifens.

4. Luftreifen (50) nach einem der Ansprüche 1 bis 3, wobei der Verlegungsabstand (p) der Lage der in etwa in Umfangsrichtung ausgerichteten, spiralförmig gewickelten Drähte (51) in dem Bereich, der axial innen in der Nähe des axialen Abstands (L/2 - h) liegt, kleiner ist als der Verlegungsabstand der Drähte in dem zentralen Bereich des Scheitels des Luftreifens.

5. Luftreifen (40, 50) nach einem der Ansprüche 1 bis 4, wobei der Scheitel (2) des Luftreifens eine zweite Verstärkungslage (5) einer axialen Breite L' aufweist, die aus parallelen und relativ zur Umfangsrichtung in einem Winkel β von 10 bis 75 Grad orientierten Drähten gebildet wird und sich in Bezug auf die erste Verstärkungslage (6) der axialen Breite L radial innen befindet, wobei sich die Lage der umlaufenden Drähte (41, 51) axial nicht bis zum axialen Abstand L' /2 erstreckt.

6. Luftreifen (1, 10, 20, 30, 60) nach einem der Ansprüche 1 bis 4, wobei der Scheitel (2) des Luftreifens eine zweite Verstärkungslage (5) der axialen Breite L' aufweist, die aus parallelen und in Bezug auf die Umfangsrichtung in einem Winkel β ausgerichteten Drähten gebildet wird und sich in Bezug auf die erste Verstärkungslage (6) der axialen Breite L radial innen befindet, wobei sich die Lage der umlaufenden Drähte (7, 61) axial über den axialen Abstand L'/2 hinaus erstreckt.

7. Luftreifen (1, 10, 20, 30, 40, 50, 60) nach einem der Ansprüche 1 bis 6, wobei der axiale Abstand h im Bereich von 2 bis 10 mm liegt.

8. Luftreifen (1, 10, 20, 30, 40, 50, 60) nach einem der Ansprüche 1 bis 7, wobei der axiale Abstand H über 2 mm liegt.

9. Luftreifen (20) nach einem der Ansprüche 1 bis 8, wobei der Laufstreifen (21) direkt mit den in einer in etwa in Umfangsrichtung verlaufenden Richtung spiralförmig gewickelten Drähten in Kontakt ist.

10. Luftreifen (30) nach Anspruch 9, wobei der Laufstreifen (21) eine erste Mischung (21), die mit dem Boden in Kontakt kommen soll, und eine Unterplatte (22) aufweist, die in radialer Richtung unter der ersten Mischung (21) angeordnet ist, wobei der Unterplatte (22) direkt mit den in einer in etwa in Umfangsrichtung verlaufenden Richtung spiralförmig aufgewickelten Drähten (7) direkt in Kontakt ist.

11. Luftreifen (1, 10, 20, 30, 40, 50, 60) nach einem der Ansprüche 1 bis 10, wobei die in Umfangsrichtung orientierten Drähte mindestens zwei gleichzeitig spiralförmig gewickelte Drähte umfassen.

12. Luftreifen (1, 10, 20, 30, 40, 50, 60) nach Anspruch 11, wobei die in Umfangsrichtung ausgerichteten Drähte höchstens vier gleichzeitig spiralförmig gewickelte Drähte umfassen.

13. Luftreifen (1, 10, 20, 30, 40, 50, 60) nach einem der Ansprüche 1 bis 12, wobei die in Umfangsrichtung ausgerichteten Drähte eine Festigkeit bei 3 % Deformation über 12 cN/tex aufweisen.

14. Luftreifen (1, 10, 20, 30, 40, 50, 60) nach Anspruch 13, wobei die in Umfangsrichtung ausgerichteten Drähte eine Festigkeit bei 3 % Deformation über 20 cN/tex aufweisen.

15. Luftreifen (1, 10, 20, 30, 40, 50, 60) nach einem der Ansprüche 13 oder 14, wobei die in Umfangsrichtung ausgerichteten Drähte einen Anfangsmodul unter 900 cN/tex besitzen.

16. Luftreifen (1, 10, 20, 30, 40, 50, 60) nach Anspruch 15, wobei die in Umfangsrichtung ausgerichteten Drähte einen Anfangsmodul unter 800 cN/tex besitzen.

17. Luftreifen (1, 10, 20, 30, 40, 50, 60) nach einem der Ansprüche 1 bis 16, wobei der Draht mit hohem Modul ein Hybridseil ist, in dem mindestens eine Nylonlitze und mindestens eine Aramidlitze kombiniert sind.

18. Luftreifen (1, 10, 20, 30, 40, 50, 60) nach einem der Ansprüche 1 bis 17, wobei die in etwa in Umfangsrichtung ausgerichteten, spiralförmig gewickelten Drähte ein Standardschrumpfvermögen in der Wärme unter 3,5 % aufweisen.

19. Luftreifen (1, 10, 20, 30, 40, 50, 60) nach einem der Ansprüche 1 bis 18, wobei die in etwa in Umfangsrichtung ausgerichteten Drähte mit Verlegungsdurchmessern spiralförmig gewickelt sind, die über die gesamte Länge des Scheitels im Wesentlichen den Enddurchmessern der Drähte in dem Luftreifen nach der Vulkanisation entsprechen.

## Claims

1. A tyre (1, 20, 30, 40, 50, 60) comprising a crown (2) extended by two sidewalls (3) and two beads, a carcass (4) anchored in the two beads, said crown (2) comprising radially from the inside towards the outside
- at least one reinforcement ply (6) of axial width L, formed of parallel cords oriented at an angle α relative to the circumferential direction of between 10 and 75 degrees, and
- at least one ply of cords (7, 41, 51, 61) obtained by winding said cords in a spiral in a substantially circumferential direction, arranged radially externally relative to said reinforcement ply (6) and extending axially beyond said reinforcement ply (6),
**characterised in that**, in the zones arranged axially relative to the equatorial plane P of the tyre at a distance of between (U2 - h) and (U2 + H), the laying pitch (p) of said cords is greater than or equal to the axial distance H + h, **in that** the values of H and h are greater than or equal to 2 mm and **in that** said ply of cords (7, 41, 51, 61) has an axial width strictly greater than L + 2 H.

2. A tyre (10) comprising a crown (2) extended by two sidewalls (3) and two beads, a carcass (4) anchored in the two beads, said crown (2) comprising radially from the inside towards the outside
- at least one reinforcement ply (6) of axial width L, formed of parallel cords oriented at an angle α relative to the circumferential direction of between 10 and 75 degrees, and
- at least one ply of cords (7) obtained by winding said cords in a spiral in a substantially circumferential direction, arranged radially externally relative to said reinforcement ply (6) and extending axially beyond said reinforcement ply (6),
**characterised in that** said ply of circumferential cords (7) comprises, at least on one side of the equatorial plane P of the tyre, a first spiral winding (11) extending from the equatorial plane as far as an axial distance of (U2 - h), and at least a second spiral winding (12) extending axially externally beyond by an axial distance (U2 + H) from the equatorial plane P of the tyre, and **in that** the values of H and h are greater than or equal to 2 mm

3. A tyre (40, 50, 60) according to one of Claims 1 and 2, in which the laying pitch (p) of the ply of cords which are oriented substantially circumferentially and are wound in a spiral (41, 51, 61) is less in the zone arranged axially externally beyond the axial distance (U2 + H) than the laying pitch of said cords in the central zone of the crown of the tyre

4. A tyre (50) according to one of Claims 1 to 3, in which the laying pitch (p) of the ply of cords which are oriented substantially circumferentially and are wound in a spiral (51) is less in the zone arranged axially internally in the vicinity of the axial distance (L/2 - h) than the laying pitch of said cords in the central zone of the crown of the tyre.

5. A tyre (40, 50) according to one of Claims 1 to 4, in which, the crown (2) of the tyre comprising a second reinforcement ply (5) of axial width L', formed of cords parallel to and oriented at an angle β relative to the circumferential direction of between 10 and 75 degrees and arranged radially internally relative to the first reinforcement ply (6) of axial width L, said ply of circumferential cords (41, 51) extends axially on this side of the axial distance L'/2

6. A tyre (1, 10, 20, 30, 60) according to one of Claims 1 to 4, in which, the crown (2) of the tyre comprising a second reinforcement ply (5) of axial width L', formed of parallel cords oriented at an angle β relative to the circumferential direction and arranged radially internally relative to the first reinforcement ply (6) of axial width L, said ply of circumferential cords (7, 61) extends axially beyond the axial distance L'/2

7. A tyre (1, 10, 20, 30, 40, 50, 60) according to one of Claims 1 to 6, in which the axial distance h is of between 2 and 10 mm

8. A tyre (1, 10, 20, 30, 40, 50, 60) according to one of Claims 1 to 7, in which the axial distance H is greater than 2 mm.

9. A tyre (20) according to one of Claims 1 to 8, in which said tread (21) is in direct contact with said cords wound in a spiral (7) in a substantially circumferential direction

10. A tyre (30) according to Claim 9, in which, the tread (21) comprising a first mix (21) intended to come into contact with the ground and an underlayer (22) arranged radially beneath said first mix (21), said underlayer (22) is in direct contact with said cords wound in a spiral (7) in a substantially circumferential direction

11. A tyre (1, 10, 20, 30, 40, 50, 60) according to one of Claims 1 to 10, in which the circumferentially oriented cords comprise at least two cords wound simultaneously in a spiral

12. A tyre (1, 10, 20, 30, 40, 50, 60) according to Claim 11, in which the circumferentially oriented cords comprise at most four cords wound simultaneously in a spiral

13. A tyre (1, 10, 20, 30, 40, 50, 60) according to one of Claims 1 to 12, in which the circumferentially oriented cords develop a stress at 3% deformation of greater than 12 cN/tex

14. A tyre (1, 10, 20, 30, 40, 50, 60) according to Claim 13, in which the circumferentially oriented cords develop a stress at 3% deformation of greater than 20 cN/tex

15. A tyre (1, 10, 20, 30, 40, 50, 60) according to one of Claims 13 or 14, in which said circumferentially oriented cords have an initial modulus of less than 900 cN/tex

16. A tyre (1, 10, 20, 30, 40, 50, 60) according to Claim 15, in which said circumferentially oriented cords have an initial modulus of less than 800 cN/tex

17. A tyre (1, 10, 20, 30, 40, 50, 60) according to one of Claims 1 to 16, in which said cord of high modulus is a hybrid cable associating at least one nylon plied yarn and at least one aramid plied yarn

18. A tyre (1, 10, 20, 30, 40, 50, 60) according to one of Claims 1 to 17, in which the cords which are oriented substantially circumferentially and wound in a spiral have a standard high-temperature contraction potential of less than 3.5%.

19. A tyre (1, 10, 20, 30, 40, 50, 60) according to one of Claims 1 to 18, in which the cords oriented substantially circumferentially which are wound in a spiral with laying diameters corresponding substantially, over the entire width of the crown, to the final diameters of said cords in the tyre after vulcanisation
